# EUROPEAN PATENT APPLICATION

(11) **EP 2 530 405 A1**
(43) Date of publication of application: **05.12.2012**
(21) Application number: 12170471.2
(22) Date of filing: 01.06.2012
(51) Int. Cl.: F24J 2/52

(54) **Support structure for solar panels**

(30) Priority: 01.06.2011 NL 2006880
(71) Applicant: Van Der Valk Systemen B.V., 2681 LP Monster (NL)
(72) Inventor: van Deursen, Adrianus Gerardus, 2253 HA Voorschoten (NL); Prins, Vincent, 2377 DN Oude Wetering (NL); Broos, Johan Martien, 2673 BC Naaldwijk (NL)
(74) Representative: Bottema, Johan Jan

(57) **Abstract**

A support structure for solar panels (4) comprises a series of frames (1) which are arranged parallel to one another and girders (11, 12) which extend transversely to the series of frames and are attached thereto. The frames (1) each comprise two mutually parallel carriers (5-8) wherein in each case the two carriers (5-8) of a frame (1) are situated next to one another in accordance with the series.

## Description

The invention relates to a support structure for solar panels, comprising a series of frames which are arranged parallel to one another and girders which extend transversely to the series of frames and are attached thereto, each of which frames comprises two mutually parallel carriers.

Such a support structure is known from NL-C-2002778 and consists of a large number of series of solar panels which are arranged in succession on a base. In order to achieve optimum results, the panels are usually arranged at an angle, depending on the latitude of the location. The solar panels may be fixedly attached to the girders; the series preferably extend in such a manner that the solar panels face south.

The solar panels can be used to generate electricity. In this case, the solar panels comprise photovoltaic cells. However, it is also possible to use them in order to heat water. The power which is supplied in this way may cover part of the demand for energy. The proportion which solar power takes up in energy depends, inter alia, on the costs associated with the various ways of generating power. In order to limit the costs of solar power, it is desirable to keep the costs of the respective installations as low as possible.

The cost price of solar power depends, inter alia, on the costs of the solar panels themselves and the efficiency of the solar panels also plays a part. A further aspect of the costs of such an installation is related to the supporting structure and the construction thereof. It is desirable to limit the costs of the installation as much as possible. This can be achieved by using relatively simple, strong construction elements and by rationalizing the building of the installation as much as possible.

With the known support structure, the carriers are partly configured as having double pipes, and partly as having single pipes. The double pipes are in each case situated one above the other. They are connected to the single pipes by means of junctions which are formed by the girders and coupling pieces.

It is therefore an object of the invention to provide a support structure for solar panels which satisfies the abovementioned criteria of simplicity and rationality to a greater degree. This object is achieved by the fact that the two carriers of each frame are also situated next to one another in accordance with the series. This means that the two carriers of each frame are situated next to one another in the same direction as the direction in which the frames of the series are also situated next to one another. Furthermore, the two carriers of each frame are situated next to one another in the direction in which the girders extend. It may also be stated that the carriers are situated next to one another along the direction in which the solar panels extend next to one another in accordance with the series. The girders may be attached to only one single carrier of in each case one frame, or to in each case two carriers of a frame, in such a manner that each girder is supported on said two carriers of each frame in identical fashion.

The use of two carriers which are arranged directly next to one another in each frame has several advantages. Such a frame is relatively stable, due to the fact that the points of support of the carriers are situated next to one another. Consequently, the resistance to lateral deflection or tilting is thus correspondingly high. A further advantage is the fact that the fastening means used to fix the girders can be aligned in the correct position in a simple manner during construction of the support structure. Since these fastening means can rest on both carriers, they are already in the desired position which is suitable for supporting and fixing the girders, even if the carriers have a round or circular cross section.

The carriers of the frames in a series are all situated on the same side of one or more girders. Thus, it is ensured that the carriers extend transversely to the girders in their entirety, which benefits the strength and simplicity of the structure. In particular, the carriers can thus extend underneath the girders.

It is also important that the carriers of a frame may be identical. Such an identical embodiment of the carriers facilitates the construction process and reduces the risk of mistakes being made. The carriers of a frame may, for example, be at a mutual distance apart which is 0 to 5 times, preferably 0.5 to 3 times, the size of an external cross-sectional dimension of a carrier. The carriers may thus directly adjoin one another or be a distance apart which determines a free space which is at most 5, preferably 3 times the size of the external cross-sectional dimension, e.g. the external diameter of a round pipe. The mutual distance between the carriers of a frame is at least one order of magnitude smaller than the mutual distance between two adjacent frames. The carriers of a frame may be connected to one another by means of, for example, a clamp. In this connection, it is also possible for a girder to be connected to the connecting means which connects two carriers of a frame.

Preferably, two girders are used, although a greater number is also possible. The carriers of a frame may be connected to one another by two spaced-apart connecting means. In this case, two girders which are in each case connected to a respective connecting means may be provided, on to or between which the solar panels are fitted.

The carriers may be configured in different ways, e.g. in the form of profiles. However, preference is given to an embodiment in which the carriers of each frame have pipes, preferably having a round, e.g. circular, cross section. The ends of the pipes may have lips produced by flattening the pipe ends in order to attach the carriers to a base.

The carriers may have many different shapes, depending on the desired arrangement and position of the series of solar panels. According to a preferred embodiment, the carriers may have a first carrier part to which the girders are attached, and a second carrier part which extends at an angle which is different from zero with respect to the first carrier part and which faces away from the side of the first carrier part on which the girders are situated.

By means of such a pair of carriers, which are preferably formed in one part, the series of solar panels can be arranged at an angle. If desired, plates may be attached to the second carrier part which serve to guide strong winds past the arrangement. As a result thereof, the risk of the wind being able to catch the inclined panels and causing damage is reduced.

According to an efficient embodiment, support rails may be provided, wherein the ends of the carrier parts of each frame are attached to an associated support rail. Such support rails, which are usually straight, may be pre-fitted on the installation area, such as a flat roof, followed by the carriers and the girders with panels.

The girders may be attached to both carriers of in each case a frame, or to in each case only one carrier of in each case a frame. In both cases, a stable support of the girders is ensured. In the first case, the girders are stabilized by the connections to the two carriers of a frame which are situated directly next to each other. In the latter case, the stabilisation of the girders is ensured by the fact that both carriers of a frame are connected to each other and also that the connection of the girders to only one of the carriers of a frame is of rigid design. The connections are rigid to such an extent that both abovementioned options result in a stable structure.

The invention also relates to an arrangement, comprising at least one support structure as described above with a series of frames arranged parallel to one another, girders which extend transversely to the series of frames and are attached thereto, and at least a series of solar panels which is supported by the girders, each of which frames comprises two mutually parallel carriers. The two carriers of in each case a frame are also situated next to one another.

As has already been mentioned, the support structures may be used in different ways. According to a first option, the support rails may be arranged in a horizontal and flat base, such as a flat roof, wherein the ends of the carrier parts of each frame are attached to an associated support rail. According to a second option, the support rails may be fitted to an inclined or vertical base, such as a wall, wherein the ends of the carrier parts of each frame are attached to an associated support rail. If desired, the ends of the carriers may be connected to each other by means of an intermediate member, in which case the intermediate members are fixed on the support rail.

The solar panels can be attached to the girders in a simple manner. In this case, the support structures may be configured in such a way that the girders are situated at different levels with respect to the frames, which girders have mutually facing slotted parts which are able to accommodate the edges of a solar panel which are turned away from one another. The slotted part of the top girder may be deeper than the slotted part of the bottom girder, in such a manner that the solar panels can be introduced in the girders in a simple manner. Alternatively, the solar panels may be fitted on the girders, and may be fixed by means of panel clamps extending from the girders between adjacent solar panels.

Below, the invention will be explained in more detail with reference to an exemplary embodiment illustrated in the figures, in which:
Fig. 1 shows a top view of an arrangement with support structures;
Fig. 2 shows a side view;
Fig. 3 shows a perspective view of a support structure;
Fig. 4 shows the detail from IV in Fig. 2;
Fig. 5 shows the detail from V in Fig. 2;
Fig. 6 shows a side view of an alternative embodiment;

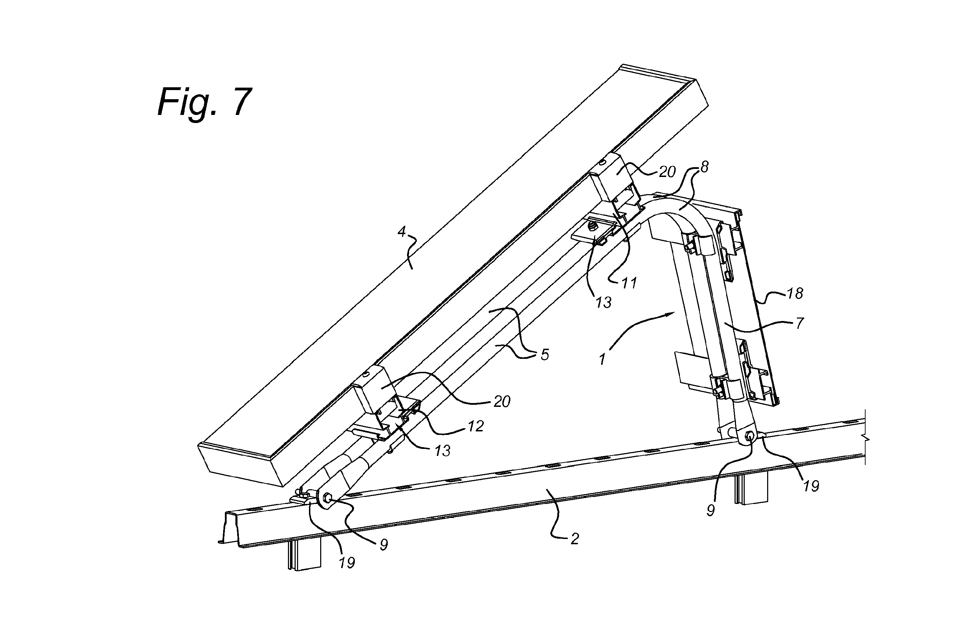

Fig. 7 shows a perspective view of the alternative embodiment.

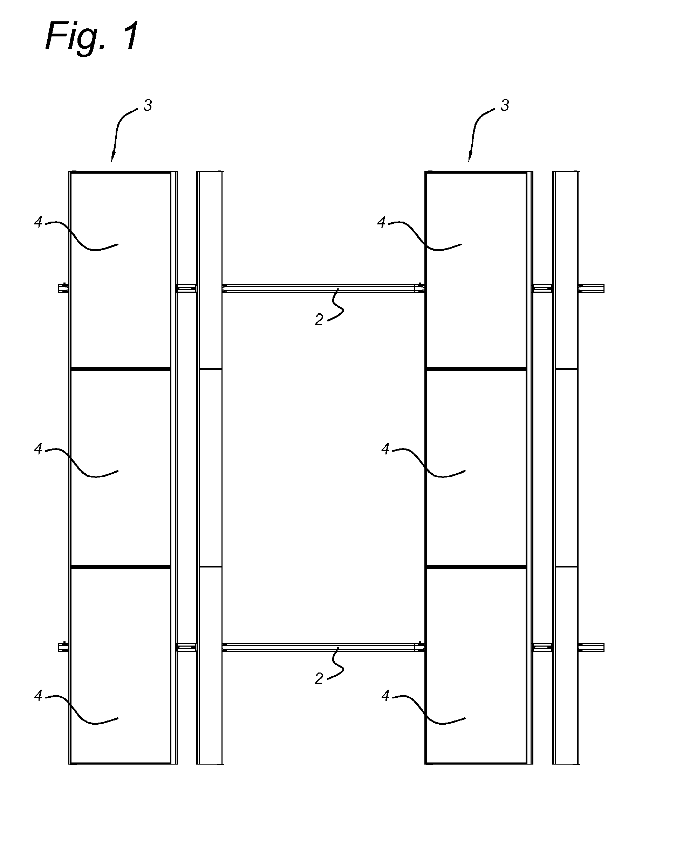

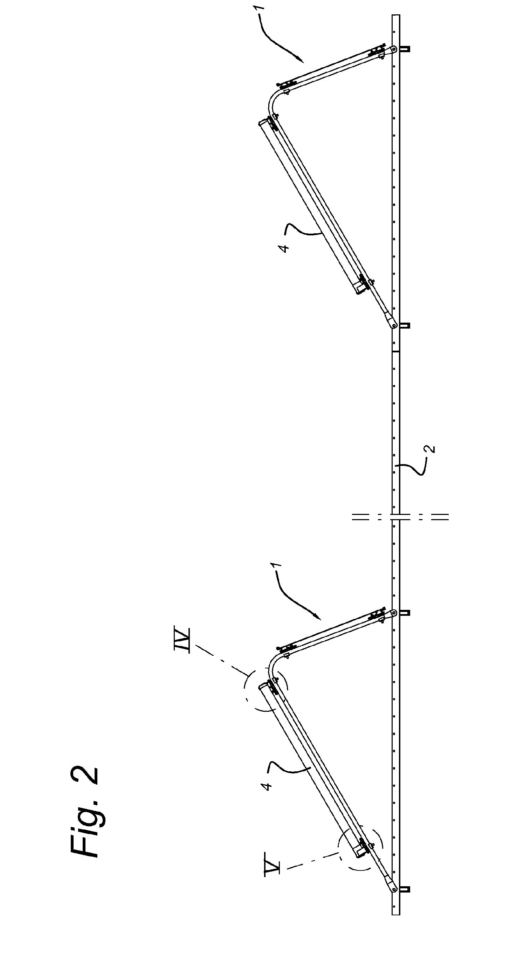

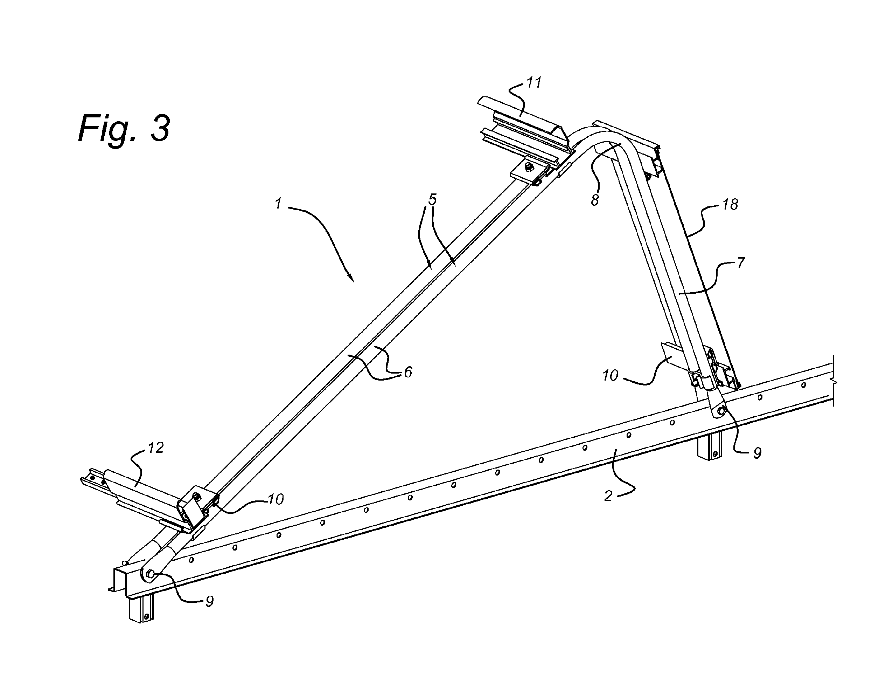

The arrangement illustrated in Figs. 1 and 2 consists of a number of frames 1 which are fitted to the rails 2. As is illustrated in Fig. 2, several frames 1 are fitted to the rails 2 in succession in order to form several series 3 of solar panels 4. As can be seen in Fig. 3, each frame 1 consists of two carriers 5, each of which consists of a straight first carrier part 6, a straight second carrier part 7 and a curved carrier part 8 which connects the straight carrier parts 6, 7 to one another. The carriers 5 are thus formed as a single part; they are formed by bending a straight pipe with circular cross section in this manner.

At their ends, the carriers 6 are flattened so as to provide lips 9. These lips on both carriers 6 of the frame 1 are clamped on either side against the rail 2 by means of a bolted connection, as is illustrated in Fig. 3. The two carriers 6 of each frame 5 are connected to each other by carrier clamps 10. Due to the fact they rest on both carriers 6, these carrier clamps 10 always have the correct orientation, so that the girders 11, 12 can also be attached thereto as well. These girders 11 extend at right angles to the frames 1.

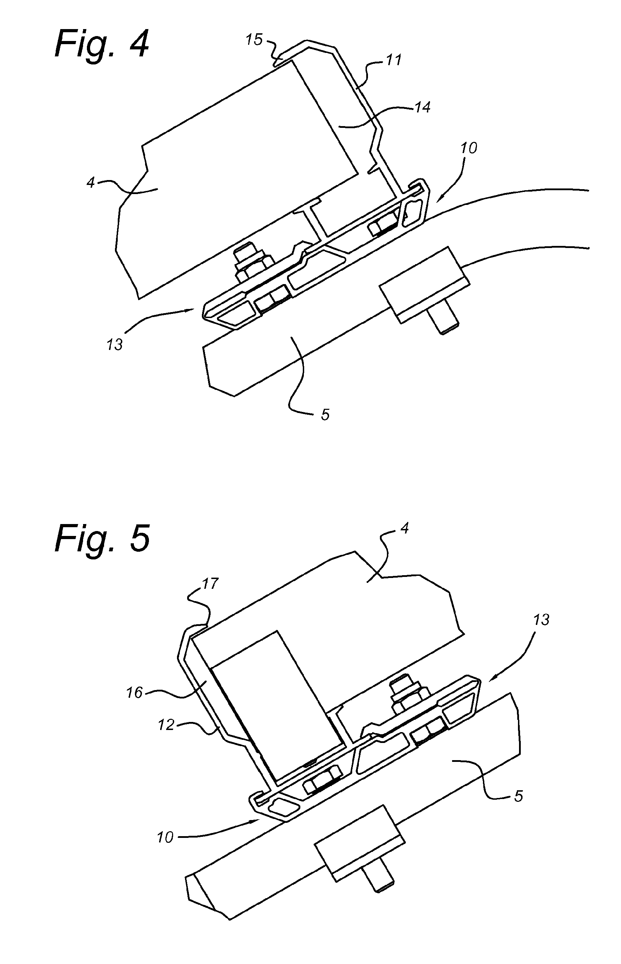

As is illustrated in Figs. 4 and 5, the carrier clamps 10 are combined with girder clamps 13 in order to fix the girders 11, 12 on the carrier clamps 10. The top edge of the solar panels 4 can first be pushed into the slot 14 of the top girder 11. Said slot 14 has a relatively long flange 15. Subsequently, the solar panels can be positioned parallel to the first carrier parts 6, and can be pushed slightly down into the slot 16 of the bottom girder 12. This slot 16 of the bottom girder 12 has a relatively short flange 17, so that the top edge of the panel 4 is still hooked under the relatively long flange 15 of the top girder 11, after the bottom edge of the panel 4 has come to a stop in the cavity 16 of the bottom girder 12. This concludes the installation of the solar panel 4.

As can be seen in Figs. 1-3, clamps 10, from which the plates 18 are suspended, are also provided on the second carrier parts 7. These plates 18 serve to reduce the vulnerability of the arrangement with regard to strong winds.

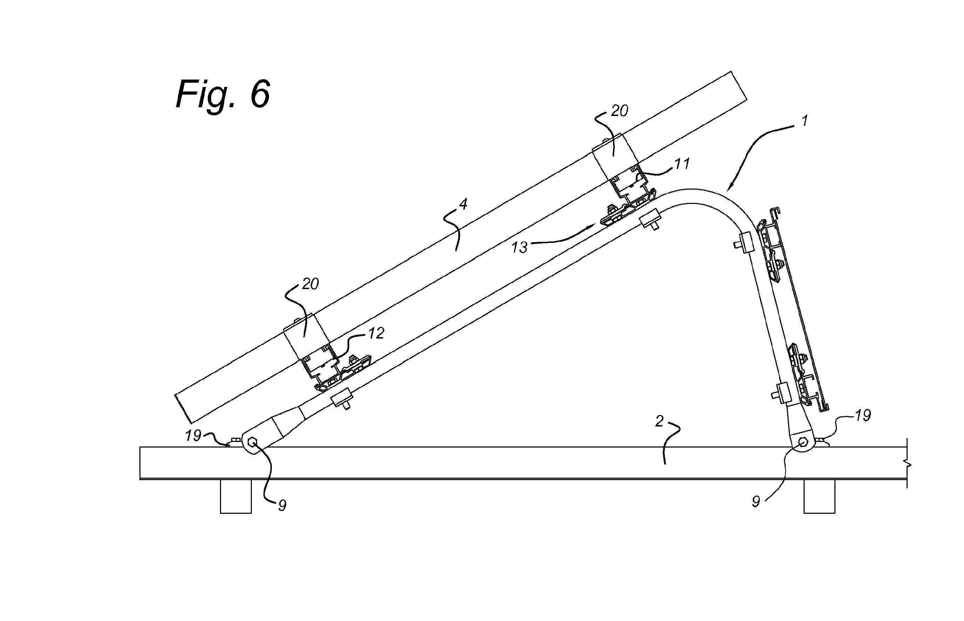

In the alternative embodiment of Figs. 5 and 6, the panels 4 are fitted on top of the girders 11 and 12, which are at a smaller distance apart than is the case in the variant from Figs. 1-4. In each case two adjacent panels 4 (only one of which is illustrated in Fig. 6) are fixed by means of the panel clamps 20 which extend from the carriers 5 from frame 1.

Likewise alternatively, Figs. 5 and 6 show that the lips 9 of the carriers 5 may be fixed to the respective rail 2 via an intermediate part 19.

### List of reference numerals

- 1.: Frame
- 2.: Rail
- 3.: Series of solar panels
- 4.: Solar panel
- 5.: Carrier of frame
- 6.: First carrier part
- 7.: Second carrier part
- 8.: Curved carrier part
- 9.: Lip of carrier
- 10.: Carrier clamp
- 11.: Top girder
- 12.: Bottom girder
- 13.: Girder clamp
- 14.: Cavity of top girder
- 15.: Lip of top girder
- 16.: Cavity of bottom girder
- 17.: Lip of bottom girder
- 18.: Plate
- 19.: Intermediate member
- 20.: Panel clamp

## Claims

1. Support structure for solar panels (4), comprising a series of frames (1) which are arranged parallel to one another and girders (11, 12) which extend transversely to the series of frames and are attached thereto, each of which frames (1) comprises two mutually parallel carriers (5-8), **characterized in that** in each case two of the carriers (5-8) of a frame (1) are also situated next to one another in accordance with the series.

2. Support structure according to Claim 1, wherein the carriers (5-8) are all on one and the same side of a girder (11, 12).

3. Support structure according to Claim 1 or 2, wherein the carriers (5-8) of a frame (1) are at a mutual distance apart which is 0 to 5 times, preferably 0,5 to 3 times, the size of an external cross-sectional dimension of a carrier.

4. Support structure according to one of the preceding claims, wherein the carriers (5-8) of a frame are connected to one another by means of a connecting means, such as a clamp (10).

5. Support structure according to Claim 4, wherein a girder (11, 12) is also connected to the connecting means (10) which connects two carriers (5-8) of a frame (1).

6. Support structure according to Claims 4 and 5, wherein the carriers (5-8) of a frame (1) are connected to one another by two spaced-apart connecting means (10) and wherein two girders (11, 12) which are in each case connected to a respective connecting means are provided, on to or between which the solar panels (4) are fitted.

7. Support structure according to one of the preceding claims, wherein the carriers (5-8) of each frame are identical, and comprise, for example pipes, preferably having a round, e.g. circular, cross section.

8. Support structure according to Claim 7, wherein the ends of the pipes have lips (9) produced by flattening the pipe ends.

9. Support structure according to one of the preceding claims, wherein the carriers have a first carrier part (6) to which the girders (11, 12) are attached, and a second carrier part (7) which extends at an angle which is different from zero with respect to the first carrier part and which faces away from the side of the first carrier part on which the girders are situated.

10. Support structure according to Claim 9, wherein the first and second carrier part (6, 7) form a single part.

11. Support structure according to one of the preceding claims, furthermore comprising support rails (2), wherein the ends (9) of the carriers (5) of each frame (1) are attached to an associated support rail, such as by an intermediate member (19).

12. Support structure according to one of the preceding claims, wherein the mutual distance between the carriers (5) of a frame (1) is at least one order of magnitude smaller than the mutual distance between two adjacent frames.

13. Support structure according to one of the preceding claims, wherein the girders are in each case attached to one or both carriers (5-8) of a frame (1).

14. Arrangement, comprising at least a support structure according to one of the preceding claims comprising a series of frames (1) arranged parallel to one another, girders (11, 12) which extend transversely to the series of frames and are attached thereto, and at least one series of solar panels ( 4) which is supported by the girders, each of which frames (1) comprises two mutually parallel carriers (5), **characterized in that** in each case two carriers (5-8) of a frame are also situated next to one another according to the series.

15. Arrangement according to Claim 14, further comprising horizontal, inclined or vertical support rails (2) attached to a flat, inclined or vertical base, such as a flat roof, a pitched roof or a wall, wherein the ends of the carriers (5) of each frame (1) are attached to an associated support rail.
